# EUROPEAN PATENT SPECIFICATION

(11) **EP 0 408 333 B1**
(45) Date of publication and mention of the grant of the patent: **08.03.1995**
(21) Application number: 90307571.1
(22) Date of filing: 11.07.1990
(51) Int. Cl.: C09D 11/10, B41M 1/42

(54) **Jet printing ink and method**
Strahldrucktinte für den Betrieb bei Raumtemperatur und Verfahren hierzu
Encre d'impression par jet utilisable à la température ambiante

(30) Priority: 14.07.1989 US 379595; 20.09.1989 US 409753
(43) Date of publication of application: 16.01.1991
(73) Proprietor: XAAR LIMITED, Cambridge CB4 4WE (GB)
(72) Inventor: Kruse, Jurgen M., Clinton, Connecticut 06413 (US); Kimball, Donald B., Jr., Guilford, Connecticut 06437 (US)
(74) Representative: Cropp, John Anthony David

(56) References cited:
- EP-A- 0 071 345
- US-A- 4 070 322
- US-A- 4 465 800

## Description

### BACKGROUND OF THE INVENTION

### Field of the Invention

This invention relates generally to ink compositions and, more particularly, this invention relates to ink compositions useful in jet printing applications with plain paper, and methods of ink jet printing on plain paper.

### Description of Related Art

Printing according to the "ink jet printing" principle, and apparatus for carrying out such printing operations, are well known. In general terms, a fluid ink is forced, under pressure and often at an elevated temperature, through a very small orifice in a printing head.

In so-called "continuous" jet printing operations, ink droplets are passed through a charging area wherein individual droplets receive an electrical charge in response to a signal. The droplets then pass through an electrical field, causing a varied deflection of the individual droplets dependent on the intensity of the charge and field. The droplets are produced continuously, and are directed to the substrate to be printed or, alternatively, to a by-pass gutter.

Due to the nature of the "continuous" jet printing process, inks used therein must be conductive so as to accept a charge. Such inks are generally water-based, as aqueous solutions or dispersions are easily rendered conductive. Water-based inks are generally characterized as having a low viscosity and high volatility. Both characteristics can be disadvantageous.

If the viscosity of a jet printing ink is excessively low, misting and the production of stray droplets can result, which in turn can result in unreliable printing operation or poor print quality. High volatility of a jet printing ink can result in clogging of jet nozzles due to evaporation.

Also only a few water-based inks are capable of use on plain paper (i.e. a paper not bearing a pigment coating) and are capable of providing a high dye concentration on the surface of the paper so that it is possible to produce fine-sized droplets and to avoid build-up of dyestuff on the substrate surface while providing high color intensity.

So-called "drop on demand" (DOD) systems differ from continuous jet printing systems in that ink droplets are expelled from the nozzle of a printing head only when required during the printing process.

In a DOD printing system, ink is provided from a reservoir via a supply system to a nozzle/actuator system in the printing head. The actuators are generally of the piezoelectric or bubble type, and pressurize ink upon activation to force this ink from a chamber defined by the actuator through a jet nozzle associated therewith.

Since inks used in DOD systems need not be conductive, they have generally been formulated using primarily non-aqueous solvents such as ethylene glycols, particularly diethylene glycols, which are characterized as having low volatility. As such, ethylene glycol and similar solvent-based inks do not evaporate quickly and, thus, exhibit reduced clogging problems.

However, ethylene glycol and other non-aqueous solvents have a relatively high viscosity (which varies significantly with temperature) and thus require relatively more energy for production of droplets.

Solvent-based inks exhibit desirable drying characteristics and are biologically stable while water-based inks generally tend to sorb air from the environment and are susceptible to biological fouling.

In some cases, it may be desirable to use a non-conductive ink (or one having extremely low conductivity) in DOD printers. For example, in DOD actuators wherein piezoelectric electrodes are disposed within an ink-containing chamber, the ink is preferably non-conductive in order to minimize or eliminate electrochemical effects.

Another class of inks used in jet printing are referred to in the art as "hot melt" inks and comprise wax or other thermoplastic materials such that the ink is solid or semisolid at ambient temperatures but fluid at elevated temperatures. The heated ink fluid solidifies when it comes in contact with a paper target.

Such inks generally tend to exhibit excellent dye stability, lightfastness, and no solvent volatility. However, these inks accommodate only.relatively low dye concentration and therefore necessitate the production of relatively large drops in order to provide acceptable color intensity. Also, the thermoplastic component of such inks tends to form raised waxy deposits which are easily smeared or scratched off by rubbing.

Hot melt jet inks tend to be highly viscous and thus require high energy input in order to eject the drop from the printer nozzle. Also, since the entire ink must be rendered fluid by heating, high energy inputs and lengthy time periods are required to reach the printer operating temperature.

It is an object of the invention to overcome one or more of the problems described above.

According to the present invention, an ink jet printing ink composition is provided which is fluid at a temperature in the range 20 to 35°C and is in the form of a sol, and wherein the liquid medium comprises a non-aqueous solvent and the disperse phase comprises a dyestuff which is substantially insoluble in the solvent at said temperature; said composition further including a resin which, in the concentration employed, would dissolve in said solvent at said temperature; said dyestuff being bound to or soluble in said resin at said temperature. It is to be understood, however, that where the resin is ethylene/vinyl acetate copolymer, the liquid medium must be other than xylene, kerosene, methyl isobutyl ketone or cyclohexanone, having regard to Table I of the document EP-A 403272.

The ink is fluid and ink compositions according to the invention may be formed which have a suitable low viscosity at said temperature, e.g. room temperature, for use in ink jet printers, e.g. 40 cps or lower, preferably 30 cps or lower, as measured on a Brookfield Viscometer.

By the resin being capable of forming a solution in the solvent, we mean that it will dissolve in the solvent or else is so highly solvated that the product is substantially indistinguishable from a true solution. By the dyestuff being bound to the resin, we mean that the dyestuff and resin are bound together by electro-attractive forces such as hydrogen bonding or Van der Waal's bonds, whereby the dyestuff associates with the resin rather than the solvent in the sol. By a sol, we mean a suspension in a liquid medium of particles in the colloidal size range, the particles being referred to as the disperse phase.

The ink compositions of the invention are useful on a wide variety of plain papers, facilitate the production of fine dots without the production of easily smudged raised deposits, facilitate mixing of colors, provide high color intensity, and are economical in that they may be used at room temperature.

A method of ink jet printing on plain paper using the inventive ink composition is also provided.

Other objects and advantages of the invention will be apparent to those skilled in the art from a review of the following detailed description taken in conjunction with the appended claims.

The inventive jet ink compositions exhibit many of the advantages of prior solvent-based, water-based, and hot melt jet printing inks while eliminating important disadvantages associated with each of these types of inks. The inventive inks exhibit excellent dye stability, water fastness, low solvent volatility, and lightfastness associated with prior hot melt inks, yet exhibit desirable drying characteristics and excellent biological stability such as exhibited by prior solvent-based inks.

Similar to many water-based inks, the inventive ink compositions are compatible with plain paper (i.e. paper which is free of a pigment coating) and are capable of providing a high dye concentration on the surface of a paper target, with very sharp edged ink deposits and rapid drying.

The inventive jet ink composition comprises a sol wherein the liquid medium comprises a non-aqueous solvent and the disperse phase comprises a resin which is soluble in the solvent at a temperature within the above-mentioned temperature range and a dyestuff which is bound to or soluble in the resin at said temperature but is substantially insoluble in the solvent at said temperature. The respective proportions of the solvent, resin, and dyestuff are selected to provide an ink composition which is fluid at said temperature, which may suitably be room temperature.

The dispersed particles (which in this case include the resin and the dyestuff) are typically small enough to pass through a filter membrane having 10 »m openings, or even as small as 0.5 »m openings in the case of what is referred to below as the first embodiment of the invention.

When the ink contacts a paper surface, the disperse phase of the sol settles on the surface with the resin binding the dyestuff to the cellulose of the paper. This maximizes the effective color, while the solvent is absorbed by the paper. Since the dyestuff is insoluble in the solvent, the dyestuff is not absorbed into the paper or wicked laterally on to the paper.

If necessary, to maintain the resin and dyestuff in stable suspension, an effective amount of a suspending agent may be present in the ink composition.

In accordance with one embodiment of the invention, the resin and solvent are chosen to give a solution which is non-Newtonian at said temperature within the range 20 to 35°C, and preferably at room temperature. The resin is soluble in the solvent at relatively low concentrations, e.g. up to 7% by weight, but the solution viscosity changes substantially with a'"small increase in concentration of the resin such that a gel is formed at higher concentrations. Upon ejection from the printer onto a plain paper substrate, the sol which carries the dyestuff precipitates or gels on the surface of the substrate as solvent is absorbed into the substrate.

In accordance with another, and more preferred, embodiment, the resin is selected from synthetic polymers and natural resins which are substantially insoluble in water and are precipitated from solution in the solvent as a result of contact with plain paper. Upon ejection of the ink from the printer on to a plain paper substrate, the resin of the sol, together with the dyestuff associated with it, is precipitated on to the surface of the substrate or forms a gel thereon as a consequence of being rendered insoluble in the solvent by contact with water and/or surface size in the paper.

The various components of the ink composition of the invention will now be described in greater detail.

### The Solvent

The solvent is selected to form a low viscosity colloidal suspension with the resin and dyestuff at a temperature within the range 20-35°C, more preferably in the range 20-27°C, but to allow the disperse phase of resin and dyestuff to precipitate or gel when the ink composition comes into contact with a paper substrate surface. The solvent must be rapidly absorbed (i.e. wicked) into the paper substrate. The solvent should have a relatively high boiling point to prevent or minimise evaporation and consequent deposition of solids in the jet printing nozzle, which can result in clogging.

The selection of the solvent is made in conjunction with the selection of resin and dyestuff. As described in detail below, certain ethylene-vinyl acetate (EVA) copolymers are highly preferred sol-forming resins for the first embodiment and certain natural polysaccharides and polyacrylic resins are preferred for the second embodiment.

For use with these preferred resins, useful solvents include generally one or more propylene glycol ethers or ethylene glycol butyl ethers in which the solubility requirements of the resin and dyestuff as described herein are satisfied.

Such solvents include dipropylene glycol ethers, tripropylene glycol ethers, ethylene glycol butyl ethers, diethylene glycol butyl ethers and triethylene glycol butyl ethers. Propylene glycol alkyl ethers such as dipropylene glycol monomethyl ether and tripropylene glycol monomethyl ether are preferred, with tripropylene glycol monomethyl ether being highly preferred.

Glycol ethers such as dipropylene glycol monomethyl ether (boiling point 188°) and tripropylene glycol monomethyl ether (boiling point 242°C) perform very well and exhibit cloud points using typical concentrations of the preferred ethylene-vinyl acetate resin of less than 20°C. These cloud points are substantially below ambient temperatures, ensuring that the EVA resin will be substantially soluble in such solvents at ambient conditions.

Solvents which are suitable for use according to the invention are available commercially from several suppliers, including Dow Chemical U.S.A. of Midland, Michigan under the trade designation "Dowanol". Tripropylene glycol monomethyl ether is designated "Dowanol TPM." Dipropylene glycol monomethyl ether is available under the designation "Dowanol DPM". Ethylene glycol n-butyl ether is sold under the designation "Dowanol EB", and diethylene glycol n-butyl ether is designated "Dowanol DB". Triethylene glycol n-butyl ether is available as "Dowanol TBH".

For use with EVA resins, solvents such as dimethylformamide or tetrahydrofuran are not acceptable since many of the preferred dyestuffs tend to be more soluble in the solvent than in the resin and thus sorbed into the paper with the solvent. This sorption results in lateral dot wicking and lower optical density. Likewise alcohols and polyols such as ethylene glycol and diethylene glycol are not suitable because EVA is not soluble therein.

### The Resin

For use in the invention, one or more resins which are soluble in the solvent at a temperature, such as room temperature, within the range 20 to 35°C, e.g. 25 to 30°C, are selected. The resin preferably will adhere well to the paper substrate, should be optically clear, and should hold the selected dyestuff on the paper surface at ambient conditions.

Rapid dissolution is facilitated by the use of low melting point resins.

Ethylene-vinyl acetate copolymer resins are highly preferred for use in the first embodiment of the invention. EVA resins, especially those having relatively high vinyl acetate contents of greater than 40 wt. %, preferably greater than 45 wt. % and highly preferably about 50 wt. % or more, adhere extremely well to cellulosic substrates and have softening points which can be varied from just above ambient temperature to higher temperatures by varying the vinyl acetate content. A useful EVA resin has a vinyl acetate content of about 50 wt. % and is sold by Quantum Chemical Corporation, USI Division under the trade designation Vynathene 90500. Vynathene 90230 sold by Quantum (USI) is also suitable.

For use in the second-mentioned embodiment of the invention, the resin is selected from synthetic polymers and natural resins which are insoluble in water but soluble in the chosen solvent at a temperature within the range 20 to 35°C, e.g. 25 to 35°C, and which are precipitated from solution in the said solvent on contact with plain paper as a result of the action of residual water that is invariably present in paper and/or size in the paper. Such polymers or resins are generally alcohol-soluble. Generally speaking, suitable resins are found amongst those which are precipitated from solution in the chosen solvent on contact with excess water.

Preferred resins for the second embodiment are natural resins and synthetic analogs thereof such as alcohol-soluble polysaccharides and alcohol-soluble polyacrylic resins. A preferred polyacrylic resin is Rohm and Haas Acryloid DM 55 thermoplastic acrylic resin. Suitable natural resins include, without limitation, Gums Kauri, Copal, Mastic, and Sandarac, and useful synthetic polymers include Beckacite® fumaric, maleic, and modified phenolic resins from Reichold Chemicals, Inc.

### The Dyestuff

The dyestuff (which may include certain pigments such as carbon black) is selected to be soluble in, or able to be bound by the resin at the specified temperature in the range 20 to 35°C,e.g. room temperature, and above but to be substantially insoluble in the solvent at the specified temperature. A wide variety of dyestuffs are useful and many of those characterised as "pigment dyes" in The Colour Index are satisfactory. Since the dyestuff is soluble in, or bound by the resin, mixing of hues on the paper surface is facilitated. The dyestuff is preferably of a primary subtractive hue. The dyestuff should be lightfast, and thermally stable even with repeated warming. The dyestuff should be water insoluble once applied to the substrate to prevent smearing upon contact with water containing substances.

Dyes which have been found to be useful include Pigment Green 7. Pigment Blue 15, Pigment Yellow 17, Pigment Yellow 83, Pigment Yellow 12, Pigment Black 2, Pigment Black 5, Pigment Black 7, Pigment Red 17, Pigment Red 23, Pigment Red 57 and Pigment Red 112 and the Ciba Geigy Microlith Series which includes Black, Red, Blue, Green, and Gold. Pigment Blue 15-6 is a preferred dyestuff.

Other useful dyes include Cyan Blue BNF, Imperial Sacandaga Yellow and Lithol Rubine. These dyes are especially suitable in combination with the preferred TPM solvent and Vynathene EVA resins.

Additionally, certain carbon blacks are useful as pigments in the invention. Preferred carbon blacks are Continex N234 or N330 carbon black from Witco Chemical Corp. and Regal 660R carbon black from Cabot Corp.

### The Suspending Agent

For many dyes (with exceptions, such as Witco Continex N234 carbon black) it is necessary to add a suspending agent to the ink to stabilize the sol at the specified temperature in the range 20 to 35°C, e.g. room temperature; that is, to keep the particles of dyestuff and resin from settling out of solution or coagulation, especially when the ink is stored for extended time without agitation. In the first embodiment of the invention, for ink systems wherein ink conductivity is permissible anionic surfactants (e.g. sodium lauryl sulfonate) can be used to prevent the suspended sol particles from agglomerating and settling. If low solution conductivity is required, a different type of dispersant is required. Glycerol monostearate, glycerol monolaurate and similar monoesters of glycerol work well in systems according to the first embodiment. The related di- and triesters of glycerol. i.e. glycerol distearate or glycerol tristearate, are not effective, and in fact are counterproductive in that they cause settling and form precipitates that float on the ink solution. The concentration of the glycerol monoester should be between about 0.05 and about 0.25 wt.%, with a preferred upper limit of about 0.20 wt.%.

For use in ink compositions according to the second embodiment, surfactants, especially non-ionic surfactants with an HLB value of greater than about 13, can be used to prevent the suspended sol particles from agglomerating and settling. Depending on the dyestuff used, suspending agents such as phosphate esters e.g. polyphosporic ester acid anhydrides (Strodex PK 90 or P 100 esters from Dexter Chemical) or fatty acid polyamines such as Kenamine straight chain amines (Humko Chemical) can be used. An example of a useful nonionic surfactant is Igepal CO 720, a nonylphenoxy poly(ethyleneoxy) ethanol from GAF (HLB = 14.2).

### Proportions of Ingredients and Physical Characteristics of the Composition

According to the invention, the proportions of the solvent, resin and dye are selected to provide an ink composition which is fluid and preferably has a very low viscosity at the specified temperature within the range 20 to 35°C, e.g. room temperature.

Although the ink compositions of the invention are fluid at said temperature, ink compositions according to the first embodiment (e.g. comprising 3 to 4 wt. % Vynathene 90500 EVA in TPM) exhibit non-Newtonian behavior at said temperature and preferably under ambient conditions. This is advantageous in that the ink composition can be formulated to behave as a gel during storage at ambient conditions, but will flow when shear force is applied.

The preferred ink compositions of the first embodiment will typically exhibit a low viscosity (i.e. in the range of 10-40 cps), and preferably 10-30 cps, typically 25 cps or lower, at the specified temperature, e.g. room temperature.

The ink compositions of the second embodiment (e.g. comprising up to about 12 wt. %, preferably about 4 to about 12 wt. %, polymer or resin in TPM), on the other hand, generally exhibit Newtonian behavior at the specified temperature and generally do not exhibit a sharp rise in viscosity with increase in concentration of the resin in the solution. Preferably, the viscosity of the ink composition will be in the range of about 15 to 25 cps at the specified temperature.

The inks of the invention are characterised by high dye absorptivity, resulting in high color intensity, and thus allow the use of relatively low dye concentrations.

Although the respective proportions of dyestuff, resin, and solvent are widely variable and may be empirically selected by the user depending upon the intended purpose, with the first embodiment of the invention it is preferred that the resin comprise about 7 wt. % or less of the ink composition, highly preferably in the range of 3 to 4 %, with the total of dye and resin being about 10 wt. % or less of the composition. The weight proportion of resin to dye is preferably low, such as up to about 3:2 or slightly more. This prevents a build-up of resin on the target surface, allows ready mixing of hues, and provides extremely good color intensity. At the same time, the advantages associated with deposition of the resin and dye on the paper surface are retained.

With the second embodiment of the invention, it is preferred that the resin comprise about 12 wt.% or less of the ink composition, and most preferably about 4 to 8%, with the total of dye and polymer or resin being about 6 to 14 wt.% or less of the composition.

It is important that the concentration of solvent is not so high as to induce solubility of the dye in the solvent.

The weight proportion of resin to dye is preferably low, such as up to about 4:3, preferably up to 3:2 or slightly more.

Preferably, the precipitate or gel deposited on the paper surface after absorption of solvent into the paper will comprise about 25-65 wt.% dye.

In the preferred Vynathene 90500 EVA resin/TPM solvent system, a preferred composition is 3 to 4 wt.% Vynathene 90500 EVA resin and a dye to resin ratio (W/W) of up to a maximum of about 3:4, preferably 2:3 or 1:2. Thus, a dye concentration of 3 wt.% in the ink composition is highly preferred.

In the preferred Acryloid DM-55 acrylic resin or Gum Copal resin/TPM solvent system, a preferred composition is 5 to 8 wt.% resin or polymer and a dye to resin ratio (W/W) of up to a maximum of about 3:4, preferably 2:3 or 1:2. Thus, a dye concentration of about 3 to 5 wt.% in the ink composition is highly preferred.

Higher resin levels than those described are disadvantageous in that they result in higher viscosities. The choice of proportions will depend on the viscosity requirements of the ink jet apparatus and the required dye characteristics, as well as the specific resin used.

One preferred method of preparing the ink is by grinding the dyestuff (e.g. carbon black) and the resin together in the presence of as small an amount of solvent as possible to disperse the materials, minimise the degree of solvation of the resin and promote the solution of the dyestuff in the resin or the binding of the dyestuff to the resin, followed by addition of more solvent to the desired concentration level. The use of this technique facilitates the combining of resin with the dyestuff and prevents settling of the dyestuff from the ink on standing. In an alternative method, the chosen resin is dissolved in hot solvent, the dyestuff added to the solution so obtained and the mixture then cooled rapidly.

According to the invention, ink jet printing on plain paper may be effected by jetting the jet ink composition against a surface of a cellulosic substrate. In the first embodiment of the invention, solvent in the ink composition is absorbed into the substrate thus increasing the resin concentration in the residual composition and causing the resin, together with the dye bound to it, to precipitate or gel on the surface to form print.

In the second embodiment of the invention, contact of the ink composition with water or size contained in the paper causes precipitation of the resin, and also the dye which is dissolved in it or bound to it, and the solvent is absorbed with the substrate.

The cellulosic substrate surface is preferably plain paper, i.e. paper which is substantially free of a pigment (e.g. silica) coating. Clay or silica fillers are acceptable but not required. Non-pigment coatings such as surface sizing, starch, etc. are acceptable.

The temperature at which the ink of the invention is jetted can be relatively low, such that room temperature operation is possible. However elevated temperatures may also be used, especially with inks of the second embodiment, provided the temperature is not so high that the bonding of the resin and dyestuff is broken.

While in general the inks of the first embodiment are tacky at room temperature whereas those of the second embodiment are not, adherence to the paper surface is excellent in both cases. Since the inks of the second embodiment are not tacky, however, ejection from the nozzle or flow in the actuator are not impeded and energy requirements for printing will generally be lower than in the case of inks of the first embodiment. The following are Examples of ink compositions according to the invention. Recorded percentages are weight percent of the total ink composition.

| Example | Solvent | Resin Elvax | conc(%) | Dyestuff | conc(%) | Viscosity (cps) |
|---|---|---|---|---|---|---|
| 1 | DPM | 40W | 3.5 | Cu phthalocyanine | 2.5 | n.r. |
| 2⁽¹⁾ | TPM | Vynathene 90500 | 4 | Witco Black 32 | 3.2 | 29 |
| 3 | TPM | -"- | 3 | Witco Black N234 | 4 | 36 |
| 4 | TPM | Gum Kauri | 4.5 | --"-- | 5 | 21 |
| 5 | TPM | Gum Sandarac | 5 | Carbon black N330 | 5 | 15 |
| 6 | TPM | Gum Copal A | 7.2 | Carbon black N234 | 5 | 29 |
| 7 | TPM | Gum Mastic | 5 | Carbon black N330 | 5 | 22 |
| 8⁽²⁾ | TPM | Gum Mastic | 5 | Carbon black N330 | 5 | 22 |
| 9 | TPM | Beckacite | 10 | Lithol Rubine | 5 | 29 |
| 10 | TPM | -"- | -"- | Heliogen Blue L6700F | 5 | 29 |
| 11 | TPM | DM 55 | 10 | Lithol Rubine | 4 | 26 |
| 12 | TPM | DM 55 | 8 | India Red | 4 | 36 |
| 13 | TPM | DM 55 | 8 | Irgalite Yellow LBIW | 4 | 36 |
| n.r. means not recorded. | | | | | | |

| | | | | | | |
|---|---|---|---|---|---|---|
| (1) Also contains 2.4% Aerosol OT as a suspending agent | | | | | | |
| (2) Also contains 0.03% OC-70 and 0.05% Lecithin as suspending agents | | | | | | |

All the above compositions give well-defined and well-bonded highly colored print on plain paper from a drop-on-demand ink jet printer at ambient temperature.

The foregoing detailed description is given for clearness of understanding only, and no unnecessary limitations should be understood therefrom, as modifications within the scope of the invention will be obvious to those skilled in the art.

1 cp of viscosity corresponds to 1 mPa.s.

## Claims

1. An ink composition which is fluid at a temperature in the range 20 to 35°C and is in the form of a sol, and wherein the liquid medium comprises a non-aqueous solvent and the disperse phase comprises a dyestuff which is substantially insoluble in the solvent at said temperature; said composition further including a resin which, in the concentration employed, would dissolve in said solvent at said temperature; said dyestuff being bound to or soluble in said resin at said temperature; provided that where the resin is ethylene/vinyl acetate copolymer, the liquid medium is other than xylene, kerosene, methyl isobutyl ketone or cyclohexanone.

2. An ink composition as claimed in claim 1 wherein said solvent is selected from propylene glycol ethers and ethylene glycol butyl ethers.

3. An ink composition as claimed in claim 2 wherein said solvent is selected from dipropylene glycol ethers and tripropylene glycol ethers.

4. An ink composition as claimed in claim 3 wherein said solvent is selected from dipropylene glycol monomethyl ether and tripropylene glycol monomethyl ether.

5. An ink jet composition as claimed in any one of claims 1 to 4 wherein the resin and solvent are chosen to give a solution which exhibits non-Newtonian behaviour at said temperature.

6. An ink composition as claimed in claim 5 wherein said resin is an ethylene-vinyl acetate copolymer.

7. An ink composition as claimed in claim 6 wherein said ethylene-vinyl acetate copolymer contains more than about 40 wt.% vinyl acetate.

8. An ink composition as claimed in claim 7 wherein said ethylene-vinyl acetate copolymer contains at least about 50 wt.% vinyl acetate.

9. An ink composition as claimed in any one of claims 5 to 8 wherein said solvent is tripropylene glycol monomethyl ether and the weight ratio of said dyestuff to said resin is about 3:4 or below.

10. An ink composition as claimed in any one of claims 5 to 9 wherein said resin comprises about 7 wt.% or less of said composition.

11. An ink composition as claimed in claim 10 wherein said resin comprises about 4 to 7 wt.% of said composition.

12. An ink composition as claimed in any one of claims 5 to 11 wherein the weight of said resin and said dye totals about 10 wt.% or less of said composition.

13. An ink composition as claimed in any one of claims 5 to 12 wherein the proportions of said solvent, said resin, and said dyestuff are selected to provide a composition viscosity of less than about 40 cps at said temperature.

14. An ink composition as claimed in any one of claims 1 to 13 which further contains a suspending agent .

15. An ink composition as claimed in claim 14 wherein said suspending agent is a monoester of glycerol.

16. An ink composition as claimed in claim 15 wherein said suspending agent is selected from glycerol monostearate and glycerol monolaurate.

17. An ink jet ink composition as claimed in any one of claims 1 to 4 wherein said resin is selected from synthetic polymers and natural resins which are substantially insoluble in water but soluble in said solvent at said temperature and are precipitated from solution in the solvent as a result of contact with plain paper.

18. An ink composition as claimed in claim 17 wherein said synethetic polymer or natural resin is selected from natural or synthetic polysaccharides and polyacrylic resins.

19. An ink composition as claimed in claim 18 wherein said resin is selected from Gum Kauri, Gum Copal, Gum Mastic, Gum Sandarac, thermoplastic acrylic polymers, and fumaric, maleic, and modified phenolic resins.

20. An ink composition as claimed in claim 17, claim 18 or claim 19 wherein said solvent is tripropylene glycol monomethyl ether and the weight ratio of said dyestuff to said resin is about 3:4 or below.

21. An ink composition as claimed in any one of claims 17 to 20 wherein said resin comprises about 12 wt.% or less of said composition.

22. An ink composition as claimed in claim 21 wherein said resin comprises about 5 to 8 wt.% of said composition.

23. An ink composition as claimed in any one of claims 17 to 22 wherein the weight of said resin and said dyestuff totals about 14 wt.% or less of said composition.

24. An ink composition as claimed in any one of claims 17 to 23 wherein the proportions of said solvent, said resin, and said dyestuff are selected to provide a composition viscosity of about 30 cps or less at said temperature.

25. An ink composition as claimed in any one of claims 17 to 24 containing a suspending agent.

26. An ink composition as claimed in claim 25 wherein said suspending agent is a nonionic surfactant with an HLB of greater than about 13.

27. An ink composition as claimed in claim 25 wherein said suspending agent is selected from polyphosphoric ester acid anhydrides and fatty acid polyamines.

28. An ink composition as claimed in any one of claims 14 to 16 and 25 to 27 wherein the concentration of said suspending agent in said ink is no greater than about 0.25 wt.%.

29. An ink composition as claimed in claim 28 wherein said suspending agent concentration is about 0.05 to about 0.20 wt.%.

30. An ink composition as claimed in any one of claims 1 to 29 wherein said dyestuff is carbon black.

31. An ink composition as claimed in any one of claims 1 to 29 wherein said dyestuff is a pigment dyestuff.

32. A method of ink jet printing on plain paper, said method comprising:
jetting an ink jet composition as claimed in any one of claims 1 to 31 against a cellulose substrate defining a surface substantially free of a pigment coating, whereby said solvent is absorbed into said substrate and said resin and dyestuff in said ink composition precipitate or gel on said surface to form print.

33. A method as claimed in claim 32 wherein the ink composition is jetted from a drop-on-demand ink jet printer.

## Patentansprüche

1. Tintenzusammensetzung, die bei einer Temperatur im Bereich von 20 °C bis 35 °C flüssig ist und in Form eines Sols vorliegt und worin das flüssige Medium ein nicht-wäßriges Lösungsmittel und die disperse Phase einen Farbstoff enthält, der im wesentlichen im Lösungsmittel bei dieser Temperatur unlöslich ist, wobei die Zusammensetzung weiterhin ein Harz enthält, das sich bei der eingesetzten Konzentration im Lösungsmittel bei dieser Temperatur löst, wobei der Farbstoff an das Harz gebunden oder darin bei dieser Temperatur gelöst wird, mit der Maßgabe, daß dann, wenn das Harz ein Ethylen-Vinylacetat-Copolymer ist, das flüssige Medium von Xylol, Kerosin, Methylisobutylketon oder Cyclohexanon verschieden ist.

2. Tintenzusammensetzung nach Anspruch 1, worin das Lösungsmittel aus Propylenglykolether und Ethylenglykolbutylether ausgewählt ist.

3. Tintenzusammensetzung nach Anspruch 2, worin das Lösungsmittel aus Dipropylenglykolether und Tripropylenglykolether ausgewählt ist.

4. Tintenzusammensetzung nach Anspruch 3, worin das Lösungsmittel aus Dipropylenglykolmonomethylether und Tripropylenglykolmonomethylether ausgewählt ist.

5. Strahldruck-Tintenzusammensetzung nach einem der Ansprüche 1 bis 4, worin das Harz und das Lösungsmittel so gewählt sind, daß sie eine Lösung ergeben, die ein Nicht-Newton' sches Verhalten bei dieser Temperatur zeigt.

6. Tintenzusammensetzung nach Anspruch 5, in der das Harz ein Ethylen-Vinylacetat-Copolymer ist.

7. Tintenzusammensetzung nach Anspruch 6, in der das Ethylen-Vinylacetat-Copolymer mehr als etwa 40 Gew.-% Vinylacetat enthält.

8. Tintenzusammensetzung nach Anspruch 7, in der das Ethylen-Vinylacetat-Copolymer mindestens etwa 50 Gew.-% Vinylacetat enthält.

9. Tintenzusammensetzung nach einem der Ansprüche 5 bis 8, in der das Lösungsmittel Tripropylenglykolmonomethylether ist und das Gewichtsverhältnis des Farbstoffs zum Harz etwa 3 : 4 oder darunter beträgt.

10. Tintenzusammensetzung nach einem der Ansprüche 5 bis 9, in der das Harz etwa 7 Gew.-% oder weniger der Zusammensetzung enthält.

11. Tintenzusammensetzung nach Anspruch 10, in der das Harz etwa 4 bis 7 Gew.-% der Zusammensetzung enthält.

12. Tintenzusammensetzung nach einem der Ansprüche 5 bis 11, in der das Gewicht des Harzes und des Farbstoffs insgesamt etwa 10 Gew.-% oder weniger der Zusammensetzung beträgt.

13. Tintenzusammensetzung nach einem der Ansprüche 5 bis 12, in der die Anteile des Lösungsmittels, des Harzes und des Farbstoffs so gewählt sind, daß sie eine Viskosität der Zusammensetzung von weniger als etwa 40 cPs bei dieser Temperatur ergeben.

14. Tintenzusammensetzung nach einem der Ansprüche 1 bis 13, die weiterhin ein Suspensionsmittel enthält.

15. Tintenzusammensetzung nach Anspruch 14, in der das Suspensionsmittel ein Glycerinmonoester ist.

16. Tintenzusammensetzung nach Anspruch 15, in der das Suspensionsmittel aus Glycerinmonostearat und Glycerinmonolaurat ausgewählt ist.

17. Strahldruck-Tintenzusammensetzung nach einem der Ansprüche 1 bis 4, in der das Harz aus synthetischen Polymeren und natürlichen Harzen, die in Wasser im wesentlichen unlöslich jedoch im Lösungsmittel bei dieser Temperatur löslich sind und aus der Lösung im Lösungsmittel als Ergebnis des Kontakts mit glattem Papier ausfallen, ausgewählt ist.

18. Tintenzusammensetzung nach Anspruch 17, in der das synthetische Polymer oder natürliche Harz aus natürlichen oder synthetischen Polysacchariden und Polyacrylsäure harzen ausgewählt ist.

19. Tintenzusammensetzung nach Anspruch 18, in der das Harz aus Kaurigummi, Copalgummi, Mastixgummi, Sandaracgummi, thermoplastischen Acrylpolymeren, und Fumar-, Malein- und modifizierten Phenolharzen ausgewählt ist.

20. Tintenzusammensetzung nach Anspruch 17, Anspruch 18 oder Anspruch 19, in der das Lösungsmittel Tripropylenglykolmonomethylether ist und das Gewichtsverhältnis des Farbstoffs zum Harz etwa 3 : 4 oder darunter beträgt.

21. Tintenzusammensetzung nach einem der Ansprüche 17 bis 20, in der das Harz etwa 12 Gew.-% oder weniger der Zusammensetzung enthält.

22. Tintenzusammensetzung nach Anspruch 21, in der das Harz etwa 5 bis 8 Gew.-% der Zusammensetzung enthält.

23. Tintenzusammensetzung nach einem der Ansprüche 17 bis 22, in der das Gewicht des Harzes und des Farbstoffs insgesamt etwa 14 Gew.-% oder weniger der Zusammensetzung betragen.

24. Tintenzusammensetzung nach einem der Ansprüche 17 bis 23, in der die Anteile des Lösungsmittels, des Harzes und des Farbstoffs so gewählt sind, daß eine Zusammensetzung mit einer Viskosität von etwa 30 cPs oder weniger bei dieser Temperatur erhalten wird.

25. Tintenzusammensetzung nach einem der Ansprüche 17 bis 24, die ein Suspensionsmittel enthält.

26. Tintenzusammensetzung nach Anspruch 25, in der das Suspensionsmittel ein nicht-ionisches oberflächenaktives Mittel mit einem HLB-Wert von großer als etwa 13 ist.

27. Tintenzusammensetzung nach Anspruch 25, in der das Suspensionsmittel aus Polyphosphorsäureesteranhydriden und Fettsäurepolyaminen ausgewählt ist.

28. Tintenzusammensetzung nach einem der Ansprüche 14 bis 16 und 25 bis 27, in der die Konzentration des Suspensionsmittels in der Tinte nicht größer als etwa 0,25 Gew.-% ist.

29. Tintenzusammensetzung nach Anspruch 28, in der die Konzentration des Suspensionsmittels etwa 0,05 bis etwa 0,20 Gew.-% beträgt.

30. Tintenzusammensetzung nach einem der Ansprüche 1 bis 29, worin der Farbstoff Ruß ist.

31. Tintenzusammensetzung nach einem der Ansprüche 1 bis 29, worin der Farbstoff ein Pigmentfarbstoff ist.

32. Verfahren zum Tintenstrahldrucken auf glattem Papier, bei dem man eine Strahldruck-Tintenzusammensetzung nach einem der Ansprüche 1 bis 31 auf ein Cellulosesubstrat mit einer Oberfläche, die im wesentlichen frei von einer Pigmentbeschichtung ist, aufstrahlt, wodurch das Lösungsmittel in das Substrat absorbiert wird und das Harz und der Farbstoff in der Tintenzusammensetzung auf der Oberfläche zur Bildung eines Drucks ausfallen oder gelieren.

33. Verfahren nach Anspruch 32, in der die Tintenzusammensetzung bei Bedarf aus einem Tintenstrahldrucker ausgestoßen wird.

## Revendications

1. Composition d'encre qui est fluide à une température comprise dans la gamme de 20°C à 35°C et est sous la forme d'un sol, et dans laquelle le milieu liquide comprend un solvant non aqueux et la phase dispersée comprend une matière colorante qui est pratiquement insoluble dans le solvant à cette température, cette composition comprenant de plus une résine, qui, à la concentration employée, va se dissoudre dans ce solvant à cette température, cette matière colorante étant liée à cette résine ou soluble dans celle-ci à cette température, à condition que lorsque la résine est un copolymère d'éthylène et d'acétate de vinyle, le milieu liquide soit autre que le xylène, le kérosène, la méthyl isobutyl cétone ou la cyclohexanone.

2. Composition d'encre suivant la revendication 1, dans laquelle ce solvant est choisi parmi des éthers de propylène glycol et des éthers butyliques d'éthylène glycol.

3. Composition d'encre suivant la revendication 2, dans laquelle ce solvant est choisi parmi des éthers de dipropylène glycol et des éthers de tripropylène glycol.

4. Composition d'encre suivant la revendication 3, dans laquelle ce solvant est choisi parmi l'éther monométhylique de dipropylène glycol et l'éther monométhylique de tripropylène glycol.

5. Composition d'encre suivant l'une quelconque des revendications 1 à 4, dans laquelle la résine et le solvant sont choisis de façon à donner une solution qui présente un comportement non-newtonien à cette température.

6. Composition d'encre suivant la revendication 5, dans laquelle cette résine est un copolymère d'éthylène et d'acétate de vinyle.

7. Composition d'encre suivant la revendication 6, dans laquelle ce copolymère d'éthylène et d'acétate de vinyle contient plus d'environ 40% en poids d'acétate de vinyle.

8. Composition d'encre suivant la revendication 6, dans laquelle ce copolymère d'éthylène et d'acétate de vinyle contient au moins environ 50% en poids d'acétate de vinyle.

9. Composition d'encre suivant l'une quelconque des revendications 5 à 8, dans laquelle ce solvant est l'éther monométhylique de tripropylène glycol et le rapport en poids de cette matière colorante à cette résine est d'environ 3:4 ou en-dessous.

10. Composition d'encre suivant l'une quelconque des revendications 5 à 9, dans laquelle cette résine constitue environ 7% en poids ou moins de cette composition.

11. Composition d'encre suivant la revendication 10, dans laquelle cette résine constitue environ 4 à 7% en poids de cette composition.

12. Composition d'encre suivant l'une quelconque des revendications 5 à 11, dans laquelle le poids total de cette résine et de ce colorant représente environ 10% en poids ou moins de cette composition

13. Composition d'encre suivant l'une quelconque des revendications 5 à 12, dans laquelle les proportions de ce solvant, de cette résine et de cette matière colorante sont choisies de façon à fournir une composition ayant une viscosité inférieure à environ 40 cps à cette température.

14. Composition d'encre suivant l'une quelconque des revendications 1 à 13, qui comprend de plus un agent de suspension.

15. Composition d'encre suivant la revendication 14, dans laquelle cet agent de suspension est un monoester de glycérol.

16. Composition d'encre suivant la revendication 15, dans laquelle cet agent de suspension est choisi parmi le monostéarate de glycérol et le monolaurate de glycérol.

17. Composition d'encre pour jet d'encre suivant l'une quelconque des revendications 1 à 4, dans laquelle cette résine est choisie parmi des polymères synthétiques et des résines naturelles qui sont pratiquement insolubles dans l'eau mais solubles dans ce solvant à cette température et qui précipitent à partir de la solution dans le solvant au contact d'un papier ordinaire.

18. Composition d'encre suivant la revendication 17, dans laquelle ce polymère synthétique ou cette résine naturelle est choisi parmi des polysaccharides naturels ou synthétiques et des résines polyacryliques.

19. Composition d'encre suivant la revendication 18, dans laquelle cette résine est choisie parmi une gomme Kauri, un gomme Copal, une gomme Mastic, une gomme Sandarac, des polymères acryliques thermoplastiques, et des résines fumariques, maléiques et phénoliques modifiées.

20. Composition d'encre suivant les revendications 17, 18 ou 19, dans laquelle ce solvant est l'éther monométhylique de tripropylène glycol et le rapport pondéral de cette matière colorante à cette résine est d'environ 3:4 ou moins.

21. Composition d'encre suivant l'une quelconque des revendications 17 à 20, dans laquelle cette résine constitue environ 12% en poids de cette composition.

22. Composition d'encre suivant la revendication 21, dans laquelle cette résine constitue environ 5 à 8% en poids de cette composition.

23. Composition d'encre suivant l'une quelconque des revendications 17 à 22, dans laquelle le poids total de cette résine et de cette matière colorante représente environ 14% en poids ou moins de cette composition.

24. Composition d'encre suivant l'une quelconque des revendications 17 à 23, dans laquelle les proportions de ce solvant, de cette résine et de cette matière colorante sont choisies de façon à fournir une composition ayant une viscosité d'environ 30 cps ou moins à cette température.

25. Composition d'encre suivant l'une quelconque des revendications 17 à 24 contenant un agent de suspension.

26. Composition d'encre suivant la revendication 25, dans laquelle cet agent de suspension est un tensioactif non ionique ayant un HLB supérieur à environ 13.

27. Composition d'encre suivant la revendication 25, dans laquelle cet agent de suspension est choisi parmi des anhydrides d'acide d'ester polyphosphorique et des polyamines d'acide gras.

28. Composition d'encre suivant l'une quelconque des revendications 14 à 16 et 25 à 27, dans laquelle la concentration de cet agent de suspension dans cette encre ne dépasse pas environ 0,25% en poids.

29. Composition d'encre suivant la revendication 28, dans laquelle cette concentration d'agent de suspension est d'environ 0,05 à environ 0,20% en poids.

30. Composition d'encre suivant l'une quelconque des revendications 1 à 29, dans laquelle cette matière colorante est du noir de carbone.

31. Composition d'encre suivant l'une quelconque des revendications 1 à 29, dans laquelle cette matière colorante est un pigment.

32. Procédé d'impression par jet d'encre sur un papier ordinaire, comprenant l'émission d'un jet d'une composition pour jet d'encre suivant l'une quelconque des revendications 1 à 31, contre un substrat de cellulose définissant une surface pratiquement dépourvue de revêtement de pigment, de telle sorte que ce solvant est absorbé dans ce substrat et que cette résine et cette matière colorante dans cette composition d'encre précipitent ou forment un gel sur cette surface de façon à former une impression.

33. Procédé suivant la revendication 32, dans lequel la composition d'encre est émise en jet à partir d'une imprimante à jet d'encre à gouttelette à la demande.
